Europäisches Patentamt

European Patent Office

Office européen des brevets

(11) Veröffentlichungsnummer: **0 454 176 A1**

# EUROPÄISCHE PATENTANMELDUNG

(21) Anmeldenummer: 91107097.7

(22) Anmeldetag: 29.04.91

(51) Int. Cl.⁵: **F16H 61/38, D01H 1/24**

(30) Priorität: 27.04.90 CH 1449/90

(43) Veröffentlichungstag der Anmeldung:
30.10.91 Patentblatt 91/44

(84) Benannte Vertragsstaaten:
**CH DE FR GB IT LI**

(71) Anmelder: **MASCHINENFABRIK RIETER AG**

**CH-8406 Winterthur(CH)**

(72) Erfinder: **Grundl, Bruno**
**Ringstrasse**
**CH-8483 Kollbrunn(CH)**
Erfinder: **Ulmer, Georg**
**Breite**
**CH-8309 Nürensdorf(CH)**
Erfinder: **Schwengeler, Peter**
**In der Härti 1**
**CH-8408 Winterthur(CH)**

(54) Antrieb für eine Textilmaschine, insbesondere für Ringspinnmaschine.

(57) In einer Textilmaschine besteht der Antrieb (1) im wesentlichen aus einem Motor (12), einem ersten Riemenscheibenpaar (121, 122) und einem zweiten Riemenscheibenpaar (131, 132) sowie einem dazwischen gespannten Riemen (133). Eine erste Verstellvorrichtung (38) bewirkt bei Verschieben der Schubstange (37) und Verschwenken des Verstellhebels (124) eine Drehzahländerung an der Antriebswelle (130) bei konstanter Drehzahl der Motorwelle (120). Im Falle eines plötzlichen Maschinenstops tritt eine zweite Verstellvorrichtung (39) in Aktion, indem der Hubzylinder (30) über den Entlüfter (32) entlüftet wird und somit der Kolben (31) mit dem Verstellhebel (124) nach rechts wandert, wodurch sich die Riemenscheibe (122) nach rechts von der Riemenscheibe (121) entfernt und somit der Riemen (133) während des Auslaufens des Motors (12) auf den kleinstmöglichen Durchmesser auf den Riemenscheiben (121, 122) wandert. Damit ist die Sollposition des Riemens (133) für das Wiedereinschalten des Motors (12) bereits mit dem Ausschalten der Maschine gewährleistet.

Fig. 2

Die Erfindung betrifft einen Antrieb für eine Textilmaschine gemäss Oberbegriff des Anspruches 1.

Bei Ringspinnmaschinen ist es üblich, zur Einstellung der Arbeitsgeschwindigkeit der Maschine ein stufenloses Uebersetzungsgetriebe in Form axial gegeneinander verstellbarer Keilriemenscheibenhälften vorzusehen, die durch einen Keilriemen verbunden sind. Das Uebersetzungsgetriebe ist auch für den Maschinenanlauf nötig, damit der Antriebsmotor der Textilmaschine beim Beschleunigen des Antriebes mit seiner Nenndrehzahl laufen kann, während die Antriebswelle der Textilmaschine nur langsam anläuft. Einerseits ist dies für die Betriebsweise einer Spinnmaschine nötig, damit ein reguläres "Spinnprogramm" gefahren werden kann, andererseits ist so die Verwendung eines schwächer dimensionierten Motors möglich. Die Verstellvorrichtung für das stufenlose Uebersetzungsgetriebe wird beim Maschinenanlauf so eingestellt, dass der Riemen motorseitig auf einem möglichst kleinen Durchmesser der Riemenscheibenhälften läuft und auf der Seite der Antriebswelle auf einem möglichst grossen Durchmesser an den darauf befestigten Riemenscheibenhälften aufliegt. Zur Steigerung der Drehzahl der Antriebswelle wirkt dann die Verstellvorrichtung so auf die Riemenscheiben ein, dass der Riemen allmählich auf grösseren Durchmessern der Riemenscheibe beim Motor und auf kleineren Durchmessern der Riemenscheibe bei der Antriebswelle liegt.

Im Fall einer Betriebsstörung, wenn die Textilmaschine abrupt abgestellt wird, ohne dass das Untersetzungsgetriebe in seine Ausgangsstelle vor dem Einschalten der Maschine zurückgestellt werden kann, ist ein neuer Start der Textilmaschine unter Umständen unmöglich, wenn der Riemen motorseitig auf dem kleinsten Durchmesser und antriebsseitig auf dem grössten Durchmesser läuft. In diesem Fall muss das Uebersetzungsgetriebe durch einen Eingriff des Bedienungspersonals in seine Ausgangsstellung zurückgebracht werden.

Es ist Aufgabe der vorliegenden Erfindung, einen Antrieb für eine Textilmaschine zu schaffen, bei dem kein Eingriff durch das Personal nach einem plötzlichen Maschinenstop und vor dem Wiedereinschalten nötig ist.

Diese Aufgabe wird erfindungsgemäss durch das Kennzeichen des Anspruchs 1 gelöst. Vorteilhafte Weiterbildungen des allgemeinen Erfindungsgedankens sind durch die Unteransprüche beschrieben. Durch die Anordnung der zweiten Verstellvorrichtung gemäss der Erfindung wird das Uebersetzungsgetriebe bereits während des Auslaufens der Textilmaschine nach dem Abschalten bzw. nach dem Stromausfall in diejenige Stellung gebracht, die es für den Neustart einnehmen muss. Sofern die erste Verstellvorrichtung beim plötzlichen Anhalten der Textilmaschine aus der Ausgangsposition nicht in die andere Endlage gefahren ist, wird durch die zweite Verstellvorrichtung nur der zum Zurückschalten des Uebersetzungsgetriebes nötige Arbeitshub ausgeführt, der gleich gross wie der zuvor von der ersten Verstellvorrichtung geleisteten Arbeitshub ist. Dies wird dadurch erreicht, dass die Rückstellung des Uebersetzungsgetriebes durch die zweite Verstellvorrichtung jeweils nur bis zu einem festen Anschlag innerhalb des Gehäuses der Textilmaschine erfolgt.

Im folgenden wird die Erfindung anhand der Figuren im einzelnen beschrieben.

Es zeigen:

Figur 1    eine schematische Darstellung des Antriebes während des normalen Betriebs des Textilmaschine, also bei hoher Drehzahl der Antriebswelle

Figur 2    den Zustand des Antriebes nach einem abrupten Maschinenstop und vor dem Wiedereinschalten bzw. bei Beginn des Wiedereinschaltens der Textilmaschine.

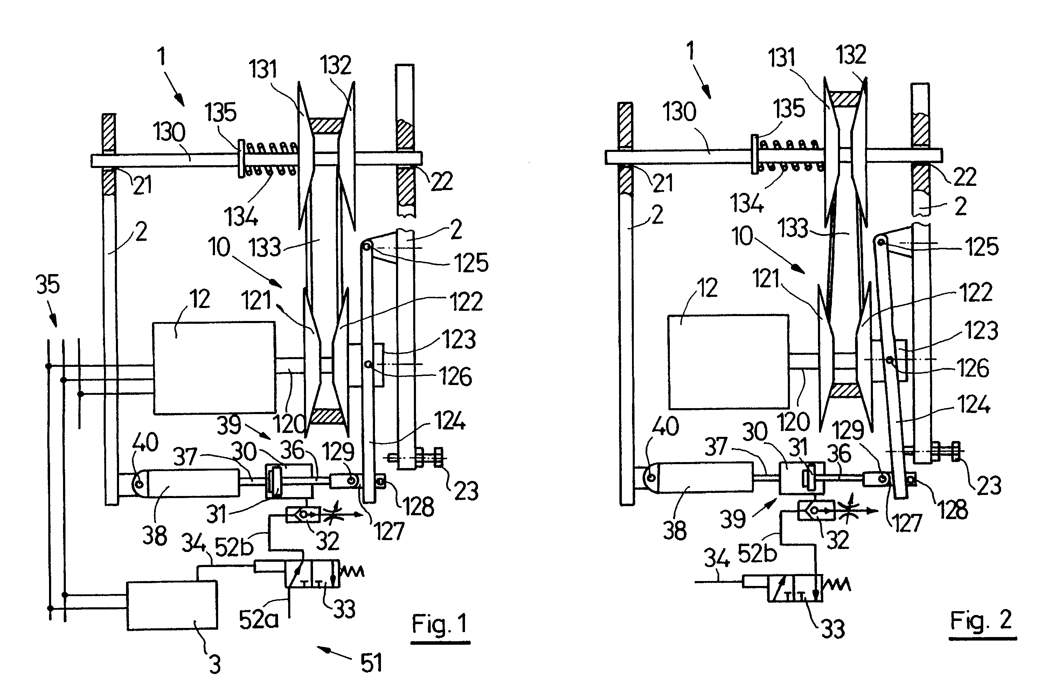

Gemäss Figur 1 ist ein elektrischer Motor 12 an ein elektrisches Netz 35 angeschlossen. Dieses versorgt auch eine Steuerung 3 mit elektrischem Strom. Eine Motorwelle 120 zwischen Motor 12 und zwei zueinander in axialer Richtung verstellbare Riemenscheiben 121 und 122 können nach Einschalten des Motors 12 mit konstanter Drehzahl laufen. Durch Verstellung des Riemens 133 auf den Riemenscheiben 121, 122 bzw. 131, 132 wird die Drehzahl der Antriebswelle 130 der Textilmaschine verändert. Hierzu wird eine erste Verstellvorrichtung 38, beispielsweise ein elektrischer Linearantrieb, in eine andere Position gebracht, in der die Schubstange 37 mehr oder weniger weit aus der Verstellvorrichtung 38 herausragt. Dadurch wird ein beim Verstellhebellager 125 schwenkbar gelagerter Verstellhebel 124 über eine Lasche 127 erfasst, welche in einem Gelenk 129 an die Kolbenstange 36 angelenkt ist. Es wird zunächst angenommen, dass die zweite Verstellvorrichtung nicht betätigt wird, so dass die Schubstange 37 und die Kolbenstange 36 während des Arbeitens der ersten Verstellvorrichtung ihre Lage relativ zueinander nicht verändern. Das Ende des Verstellhebels 124 wird einerseits durch das Gelenk 129 und andererseits durch einen zweiten Bolzen 128 beaufschlagt. Ueber einen ersten Bolzen 126 greift der Verstellhebel 124 am Mitnehmer 123 an, der mit der Riemenscheibe 122 gekoppelt auf der Motorwelle 120 sitzt. Wird beispielsweise die Schubstange 37 gemäss Figur 1 nach rechts aus der ersten Verstellvorrichtung 38 herausgefahren und dadurch gleichzeitig die zweite Riemenscheibe 122 gegenüber der ersten Riemenscheibe 121 ebenfalls nach rechts verschoben, wird der Riemen 133 die Riemenscheiben 121 und 122 auf einem kleineren Radius berühren, da die dritte und vierte Riemenscheibe 131 und 132 aufgrund der Belastung durch eine Druckfeder 134, die einerseits gegen einen Anschlag 135 und andererseits gegen die dritte Riemenscheibe 131 anliegt, bestrebt sind, den Riemen 133 auf ihrem grösstmöglichen Durchmesser zu führen. Wenn die erste Verstellvorrichtung 38 ein Verschwenken des Verstellhebels 124 im Uhrzeigersinn um das Verstellhebellager 125 bewirkt, dann wird der Riemen 133 gezwungen, auf den Riemenscheiben 121 und 122 einen grösseren Laufdurchmesser einzunehmen, während er aufgrund der Unveränderlichkeit seiner Gesamtlänge die dritte Riemenscheibe 131 und die vierte Riemenscheibe 132 gegen die Wirkung der Druckfeder 134 auseinanderdrückt und so auf einem kleineren Durchmesser dieser Riemenscheiben läuft. In diesem Fall wird die Drehzahl der Antriebswelle 130 bei gleichbleibender Drehzahl der Motorwelle 120 zunehmen.

Wie aus den Figuren 1 und 2 zu ersehen ist, sind beide Verstellvorrichtungen 38 und 39 seriell miteinander verbunden, wobei die erste Verstellvorrichtung 38 über ein Gelenklager 40 mit dem Gehäuse 2 verbunden ist und die zweite Verstellvorrichtung 39 den Verstellhebel mit der ersten Verstellvorrichtung 38 verbindet.

Es wird nun angenommen, dass während des in Figur 1 gezeigten Betriebszustandes die Spannung im elektrischen Netz 35 zusammenbricht, worauf die zweite Verstellvorrichtung 39 in Aktion tritt. Der Stromausfall im elektrischen Netz 35 oder auch ein willkürliches Abstellsignal, das der Steuerung 3 mitgeteilt wird, bewirken, dass über die Steuerleitung 34 das Elektroventil 33 ausgeschaltet wird, worauf keine Druckluft in den Druckluftleitungen 52A, 52B über den Entlüfter 32 in den Hubzylinder 30 gelangen kann. Dadurch wird der Entlüfter 32 geöffnet, und Druckluft strömt aus dem Hubzylinder 30 über eine Auslaufdrossel bei 32 ins Freie. Aufgrund der Wirkung der Druckfeder 134, welche die dritte Riemenscheibe 132 und vierte Riemenscheibe 132 zusammendrücken, wird dann der Riemen 133 während des Auslaufens der Spinnmaschine auf einen grösseren Durchmesser bei den Riemenscheiben 133 und 132 wandern und andererseits näher bei der Motorwelle 120 auf der ersten Riemenscheibe 121 und der zweiten Riemenscheibe 122 laufen. Dabei drückt der Riemen 133 die Riemenscheiben 121 und 122 so weit auseinander, bis der Verstellhebel 124 wie in Figur 2 gezeichnet an der Einstellschraube 23 aufliegt und kein weiteres Auseinanderdriften der Riemenscheiben 121 und 122 relativ zueinander möglich ist. Der Kolben 31 nimmt dann im Hubzylinder 30 wie in Figur 2 gezeigt eine Stellung ganz rechts ein, und der Hubzylinder 30 ist drucklos. Damit ist das Uebersetzungsgetriebe in der Ausgangsposition für das Wiedereinschalten der Textilmaschine. Für den Neustart der Textilmaschine laufen folgende Verfahrensschritte ab:

- Die erste Verstellvorrichtung 38 wird in ihre Grundstellung gebracht, wobei die Schubstange 37 nach rechts gemäss Figur 2 aus der Verstellvorrichtung herausgefahren wird. Dabei verschiebt sich der Hubzylinder 30 ebenfalls nach rechts, während der Kolben 31 ortsfest bleibt. Er wandert dabei relativ zum Hubzylinder 30 nach links in seine linke Endposition innerhalb des Hubzylinders. Die Kolbenstange 36 und somit auch der Verstellhebel 124 bleiben ebenfalls ortsfest.

- Einschalten des Elektroventils 33, Füllung des Hubzylinders 30 mit Druckluft aus der Leitung 52b über den nun geschlossenen Schnellentlüfter 32. Während der Füllung des Hubzylinders 30 mit Druckluft wird der Kolben 31 nicht mehr verschoben, da er bereits in seiner linken Endposition innerhalb des Zylinders 30 sitzt.

- Nach Hochlaufen des Motors bewirkt die erste Verstellvorrichtung 38 durch Verschieben der Schubstange 37, der in sich starren zweiten Verstellvorrichtung 39 nach links und durch Verschwenken des Verstellhebels 124 im Gegenuhrzeigersinn ein Zusammenrücken der Riemenscheiben 121, 122 und gleichzeitig das Auseinanderwandern der dritten und vierten Riemenscheibe 131 und 132, wodurch die Drehzahl der Antriebswelle 130 zunimmt.

### Bezugszeichen

| | |
|---|---|
| 1 | Antrieb |
| 2 | Gehäuse |
| 3 | Steuerung |
| 10 | stufenl. Uebersetzungsgetr. |
| 12 | Motor |
| 21 | Hauptwellenlager |
| 22 | zweites Hauptwellenlager |
| 23 | Einstellschraube (Anschlag) |
| 30 | Hubzylinder |
| 31 | Kolben |
| 32 | Entlüfter |
| 33 | Elektroventil |
| 34 | Steuerleitung |
| 35 | elektrisches Netz |
| 36 | Kolbenstange |
| 37 | Schubstange |
| 38 | Verstellvorrichtung |
| 39 | zweite Verstellvorrichtung |
| 40 | Gelenklager |
| 51 | Druckluftspeicher |
| 52a,b | Druckluftleitungen |
| 120 | Motorwelle |
| 121 | Riemenscheibe |

| | |
|---|---|
| 122 | zweite Riemenscheibe |
| 123 | Mitnehmer |
| 124 | Verstellhebel |
| 125 | Verstellhebellager |
| 126 | Bolzen |
| 127 | Lasche |
| 128 | zweiter Bolzen |
| 129 | Gelenk |
| 130 | Antriebswelle |
| 131 | dritte Riemenscheibe |
| 132 | vierte Riemenscheibe |
| 133 | Riemen |
| 134 | Druckfeder |
| 135 | Anschlag |

## Patentansprüche

1. Antrieb für Textilmaschine, insbesondere Ringspinnmaschine oder Flyer, mit einem Elektromotor mit einer Motorwelle und einer separaten Antriebswelle für die Textilmaschine, wobei zwischen Motorwelle und Antriebswelle ein stufenloses Uebersetzungsgetriebe angeordnet ist, und mit einer ersten Verstellvorrichtung für das Uebersetzungsgetriebe, dadurch gekennzeichnet, dass zusätzlich zur ersten Verstellvorrichtung (38) eine zweite Verstellvorrichtung (39) vorgesehen ist.

2. Antrieb nach Anspruch 1, dadurch gekennzeichnet, dass die erste und die zweite Verstellvorrichtung (38, 39) seriell angeordnet sind.

3. Antrieb nach Anspruch 1 oder 2, dadurch gekennzeichnet, dass die zweite Verstellvorrichtung (39) durch einen Hubzylinder (30) und einen Kolben (31) gebildet wird.

4. Antrieb nach einem der vorstehenden Ansprüche, dadurch gekennzeichnet, dass das Uebersetzungsgetriebe (10) durch zwei Paare von zueinander verstellbaren Riemenscheiben (121, 122 bzw. 131, 132) und einen sie verbindenden Riemen (133) gebildet wird.

5. Antrieb nach einem der vorstehenden Ansprüche, dadurch gekennzeichnet, dass die zweite Verstellvorrichtung (39) über einen Verstellhebel (124) an mindestens einer Riemenscheibe (122) angreift.

6. Vorrichtung nach einem der vorstehenden Ansprüche, dadurch gekennzeichnet, dass die erste Verstellvorrichtung ein linearer Elektrozylinder (38) ist, der über eine Schubstange (37) mit der zweiten Verstellvorrichtung (39) verbunden ist, und dass ausgangsseitig der zweiten Verstellvorrichtung (39) eine Kolbenstange (36) an einem Verstellhebel (124) für das Uebersetzungsgetriebe (10) angreift.

7. Vorrichtung nach Anspruch 3, dadurch gekennzeichnet, dass der Hubzylinder (30) an einen Druckluftspeicher (51) über ein Elektroventil (33), Druckluftleitungen (52a, 52b) und einen Entlüfter (32) angeschlossen ist.

8. Verfahren für den Betrieb einer Textilmaschine nach Anspruch 1, mit einem Elektromotor mit Antrieb für Textilmaschine, insbesondere Ringspinnmaschine oder Flyer, mit einem Elektromotor mit einer Motorwelle und einer separaten Antriebswelle für die Textilmaschine, wobei zwischen Motorwelle und Antriebswelle ein stufenloses Uebersetzungsgetriebe angeordnet ist, und mit einer ersten Verstellvorrichtung für das Uebersetzungsgetriebe, sowie mit einer zusätzlichen zweiten Verstellvorrichtung, dadurch gekennzeichnet, dass bei plötzlichem Abstellen der Textilmaschine die zweite Verstellvorrichtung (39) eingeschaltet wird, wodurch das Uebersetzungsgetriebe (10) in die Ausgangsposition für das Wiedereinschalten der Textilmaschine gebracht wird.

Fig. 1

Fig. 2

EP 0 454 176 A1

---

**Europäisches Patentamt**

# EUROPÄISCHER RECHERCHENBERICHT

Nummer der Anmeldung

## EP 91 10 7097

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 550 909 (ROBERTSHAW CONTROLS CO.)<br>* Seiten 23,24; Anspruch 9; Figuren 5-9 *<br>— — — | 1-8 | F 16 H 61/38<br>D 01 H 1/24 |
| A | DE-A-1 550 890 (E. ORTMANS)<br>* Seite 14, Zeilen 22-26; Seite 2; Figuren 1-3 *<br>— — — | 1-8 | |
| A | US-A-3 425 288 (R.L. GOLDEN)<br>* Spalten 4-6; Ansprüche 1-10; Figuren 1-4 *<br>— — — | 1-8 | |
| A | US-A-2 491 248 (T. CARROLL)<br>* Figuren 1-2 *<br>— — — — — | 1-8 | |

| RECHERCHIERTE SACHGEBIETE (Int. Cl.5) |
|---|
| F 16 H<br>D 01 H<br>B 65 H |

Der vorliegende Recherchenbericht wurde für alle Patentansprüche erstellt

| Recherchenort | Abschlußdatum der Recherche | Prüfer |
|---|---|---|
| Den Haag | 06 August 91 | TAMME H.-M.N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument